# FASCICULE DE BREVET EUROPEEN

(11) **EP 3 356 700 B1**
(45) Date de publication et mention de la délivrance du brevet: **18.09.2019**
(21) Numéro de dépôt: 16777663.2
(22) Date de dépôt: 30.09.2016
(51) Int. Cl.: F16H 1/32, F16H 57/02

(54) **MOTOREDUCTEUR AVEC REDUCTEUR TROCHOÏDAL ET BOITIER MONOLITHIQUE**
GETRIEBEMOTOR MIT TROCHOIDALEM UNTERSETZUNGSGETRIEBE UND MONOLITHISCHEM GEHÄUSE
GEAR MOTOR WITH TROCHOIDAL REDUCTION GEAR AND MONOLITHIC HOUSING

(30) Priorité: 01.10.2015 FR 1559343
(43) Date de publication de la demande: 08.08.2018
(73) Titulaire: MMT SA, 6304 Zug (CH)
(72) Inventeur: ANDRIEUX, Gaël, 2533 Evilard (CH); GRIVIAU, Pierre-Alexis, 25230 Seloncourt (FR); HERBEIN, Laurent, 90100 Joncherey (FR)
(74) Mandataire: IP Trust
(86) Numéro de dépôt international: PCT/EP2016/073465
(87) Numéro de publication internationale: WO 2017/055579

(56) Documents cités:
- EP-A1- 2 725 259
- EP-A1- 2 725 259
- DE-A1-102013 020 431
- DE-A1-102013 020 431
- GB-A- 271 742
- GB-A- 271 742
- US-A1- 2011 263 373
- US-A1- 2011 263 373

## Description

### Domaine de l'invention

La présente invention concerne le domaine des motoréducteurs, et plus particulièrement ceux comprenant un réducteur de type trochoïdal.

Ce principe de la réduction de la vitesse de rotation permet de réaliser des rapports de réduction importants dans un espace nettement plus restreint par rapport aux trains d'engrenages classiques constitués de pignons et roues dentées traditionnelles. A cela s'ajoute le fait que le frottement est quasiment nul car les pièces en contact roulent quasiment les unes sur les autres et que son rendement atteint ainsi près de 95 %.

De tels réducteurs trochoïdaux présentent des rapports de réduction qui peuvent atteindre typiquement, dans le cadre de l'invention, 1:160, avec un encombrement réduit.

### Etat de la technique

La demande de brevet WO2014051132 décrit un moteur à réduction de vitesse qui comprend un premier engrenage interne fixé au boîtier, un arbre d'entrée ayant une partie d'arbre excentrique, un premier engrenage externe ayant un diamètre de perçage inférieur à un diamètre de perçage du premier engrenage interne, et un élément de sortie connecté au premier engrenage externe. L'arbre d'entrée est configuré pour être mis en rotation par une entrée de rotation provenant du moteur électrique. Le premier engrenage externe est configuré pour être placé à l'intérieur du premier engrenage interne dans un état où une partie d'une dent externe du premier engrenage externe s'engage avec une dent interne du premier engrenage interne. Un élément de support fixe le premier engrenage interne dans la direction axiale de l'arbre d'entrée. EP 2 725 259 montre un autre motoréducteur entraîné par un moteur électrique et fonctionnant de manière excentrique.

### Inconvénients de l'art antérieur

Les motoréducteurs de ce type sont soumis à des efforts très importants, car le couple délivré par l'arbre de sortie est particulièrement élevé, de plusieurs dizaines à plusieurs centaines de newtons.mètres.

Les contraintes mécaniques qui s'exercent sur les composants du réducteur sont importantes et sont transmises au boîtier assurant non seulement l'habillage du réducteur, mais aussi le couplage mécanique des mouvements des disques dentés entraînant les tiges d'entraînement.

Par ailleurs, les motoréducteurs de l'art antérieur mettent en oeuvre un moteur associé à un motoréducteur, et la liaison entre ces deux parties conduit également à des risques de jeux et d'usure.

Enfin, l'assemblage des motoréducteurs de l'art antérieur est relativement complexe en raison du nombre de pièces devant être positionnées d'une manière parfaitement définie pour permettre le montage du motoréducteur.

### Solution apportée par l'art antérieur

Dans la présente invention, les caractéristiques du réducteur trochoïdal en lui-même ne sont pas essentielles ; les caractéristiques essentielles concernent l'interaction des composants du réducteur trochoïdal avec le boîtier, dont la configuration, objet de l'invention, permet d'optimiser les contraintes et la facilité d'intégration. En particulier, le nombre d'engrenages externes peut être plus important et non limité à deux. Ainsi on pourra utiliser un simple engrenage extérieur si les couples transmis et le rapport de réduction sont faibles alors que l'on pourra en utiliser trois si le couple à transmettre et/ou le rapport de réduction sont importants.

L'objet de la présente invention est de remédier aux inconvénients de l'art antérieur en proposant un motoréducteur d'une grande robustesse, avec un encombrement réduit.

A cet effet, le motoréducteur selon l'invention est constitué par un moteur électrique présentant une partie statorique et une partie rotorique entraînant l'arbre d'entrée d'un réducteur de type trochoïdal comprenant:
- au moins une zone excentrique, solidaire de l'arbre d'entrée et entraînant en rotation au moins un engrenage externe denté,
- une pluralité de tiges perpendiculaires audit engrenage externe, ladite pluralité étant solidaire avec un arbre de sortie et étant entraînée par des alvéoles traversant ledit engrenage externe,
caractérisé en ce que ledit réducteur est logé dans un boîtier monolithique rigide, définissant un volume intérieur présentant, de l'arbre d'entrée vers l'arbre de sortie, au moins quatre sections de rayons décroissants,
- une première section définissant une zone périphérique de liaison mécanique avec la partie statorique du moteur électrique,
- une seconde section assurant le positionnement mécanique du roulement de guidage de l'arbre d'entrée via une plaque support de roulement,
- une troisième section présentant au moins une surface intérieure dentée pour l'engrènement dudit engrenage externe,
- une quatrième section assurant le positionnement mécanique du roulement de guidage de l'arbre de sortie.

Avantageusement, l'arbre d'entrée est solidaire d'une première zone excentrique entraînant un premier engrenage externe et d'une deuxième zone excentrique entraînant un deuxième engrenage externe.

Préférentiellement, ladite troisième section présente une première surface intérieure dentée pour l'engrènement d'un premier engrenage externe dudit réducteur trochoïdal, et une seconde surface intérieure dentée pour l'engrènement d'un deuxième engrenage externe dudit réducteur trochoïdal, lesdites première et seconde surfaces dentées formant une zone tubulaire dentée continue.

Avantageusement, l'arbre de sortie est creux et l'arbre d'entrée est creux.

De manière préférentielle, le motoréducteur comporte une plaque support venant se positionner contre un épaulement défini au fond de ladite première section, et assurant le positionnement du roulement de guidage de l'arbre d'entrée.

Avantageusement, lesdites tiges sont reliées par une couronne mobile sans interaction d'engrenage avec le boîtier et ladite couronne mobile reliant lesdites tiges supporte une zone aimantée annulaire interagissant magnétiquement avec une sonde magnétosensible solidaire de la partie statorique.

Pour aider à l'isolation magnétique du capteur, des éléments de blindage sont disposés entre ladite partie statorique et ladite sonde magnétosensible.

De manière générale pour le capteur, ladite partie statorique comprend une sonde magnétosensible positionnée en regard d'une piste magnétique annulaire solidaire de la partie rotorique du moteur.

De façon préférentielle, ladite partie statorique est surmoulée.

De manière préférentielle, ladite quatrième section est prolongée par un fond transversal présentant une ouverture circulaire pour le passage de l'arbre de sortie et présentant à sa surface intérieure une butée annulaire pour le positionnement de l'arbre de sortie.

Avantageusement, le motoréducteur comporte un joint d'étanchéité logé entre le boîtier et ladite partie statorique.

### Description détaillée d'un exemple de réalisation non limitatif

La présente invention sera mieux comprise à la lecture de la description détaillée d'un exemple non limitatif de réalisation illustré par les dessins annexés où :
- la figure 1 représente une vue en perspective de trois-quarts dessus d'un exemple de motoréducteur selon l'invention, sans capteur de position absolue,
- la figure 2 représente une vue en perspective de trois-quarts dessous d'un exemple de motoréducteur selon l'invention, sans capteur de position absolue,
- la figure 3 représente une vue coupe selon un plan médian longitudinal d'un exemple de motoréducteur selon l'invention, sans capteur de position absolue,
- les figures 4 et 5 représentent des vues éclatées d'un exemple de motoréducteur selon l'invention, sans capteur de position absolue,
- la figure 6 représente une vue coupe selon un plan médian longitudinal d'un exemple de motoréducteur selon l'invention, avec capteur de position absolue,
- la figure 7 représente une vue en détail du capteur de position intégré au motoréducteur.

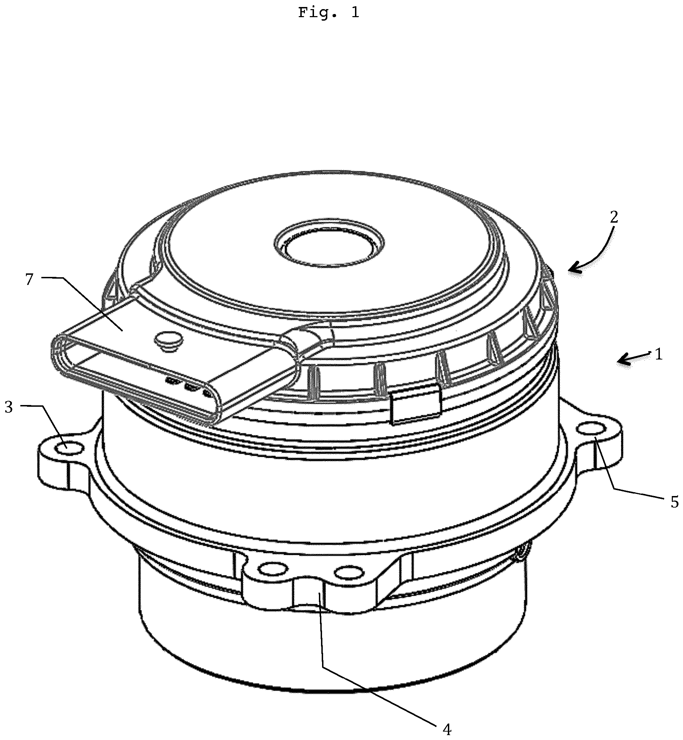

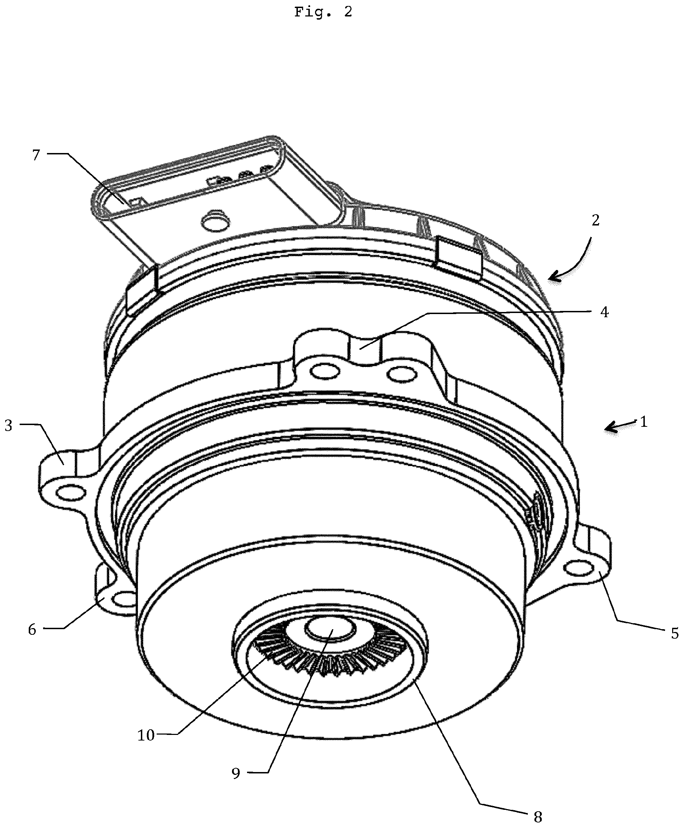

Les figures 1 et 2 représentent les vues extérieures du boîtier (1) du motoréducteur ainsi que du moteur surmoulé (2). Ce dernier est constitué par une pièce moulée en matière plastique, par exemple une matière plastique chargée pour renforcer sa résistance mécanique, ou en fonderie d'aluminium ou d'alliage métallique.

Le boîtier (1) présente des pattes de fixation (3 à 6) s'étendant radialement et présentant des perçages pour la fixation du boîtier.

Un moteur surmoulé (2) est fixé sur la partie supérieure du boîtier (1). Le surmoulage présente un prolongement latéral (7) creux pour la connexion électrique.

Le fond du boîtier (1) présente une ouverture circulaire (8) pour la transmission mécanique du couple de l'arbre de sortie (9) entrainant un crabot (10). Ce fond de boitier présente à sa surface intérieure une butée annulaire (180) pour le positionnement de l'arbre de sortie.

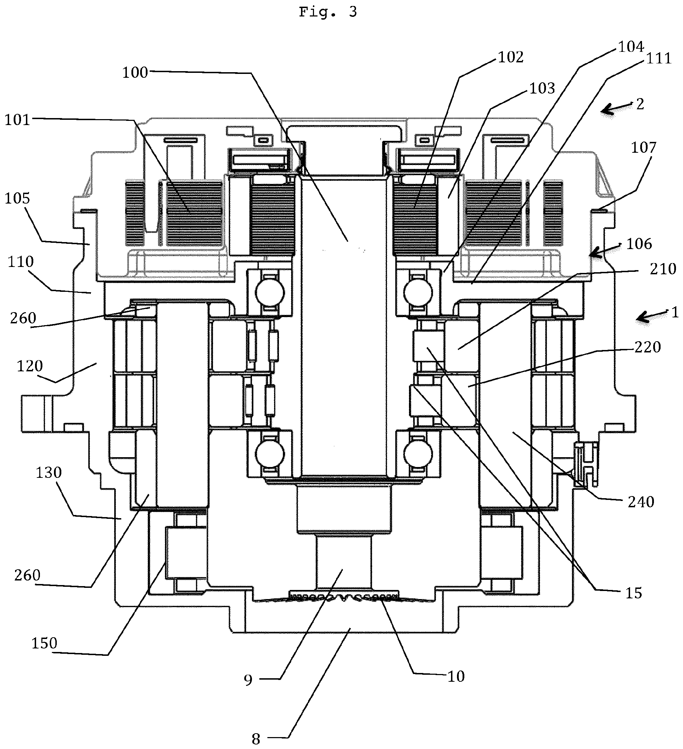

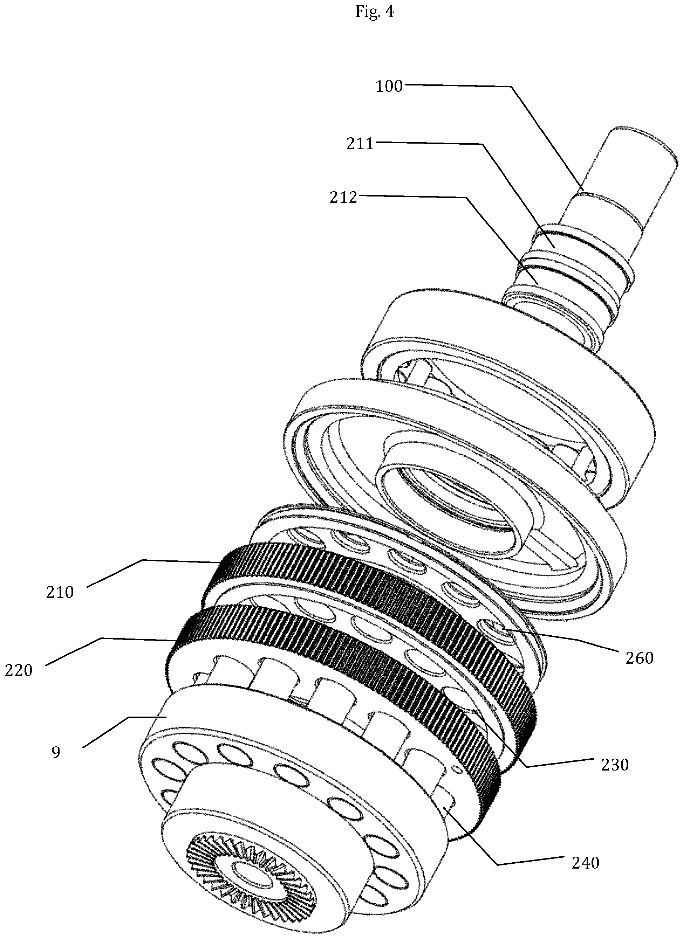

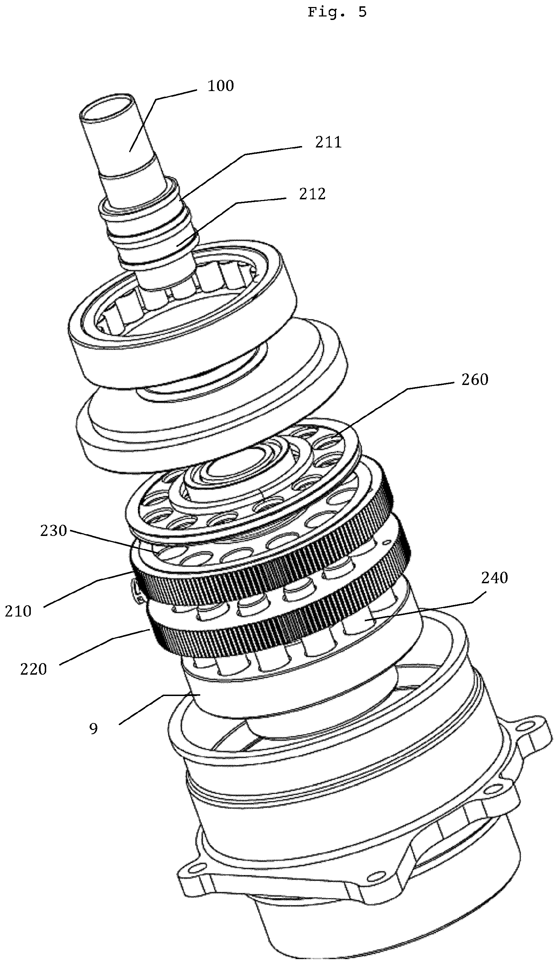

Les figures 3 à 5 représentent des vues respectivement en coupe longitudinale (figure 3) et en vues éclatées (figures 4 et 5) du motoréducteur.

La partie supérieure est constituée par un moteur électrique surmoulé (2) entrainant un arbre d'entrée (100). Le moteur comprend une partie statorique (101) bobinée et encapsulée dans un surmoulage, et une partie rotorique (102) supportant des aimants permanents (103) et solidaire de l'arbre d'entrée (100).

Le boîtier (1) présente une première section (105) dont la surface intérieure est complémentaire de la surface périphérique extérieure (106) du surmoulage du moteur (2).

Un joint (107) assure l'étanchéité entre le premier segment du boîtier (1) et le surmoulage du moteur (2).

Une seconde section (110) assure le positionnement mécanique du roulement (104) de guidage de l'arbre d'entrée (100), via une plaque support (111) positionnant le diamètre extérieur du roulement. Cette seconde section (110) présente un diamètre intérieur inférieur au diamètre intérieur de la première section (105). Cette plaque support (111) vient se positionner contre un épaulement (170) défini au fond de ladite première section, et assure le positionnement du roulement de guidage (104) de l'arbre d'entrée.

L'arbre d'entrée (100) et l'arbre de sortie (9) sont couplés mécaniquement par un réducteur trochoïdal.

L'arbre d'entrée (100) présente deux zones excentriques (211, 212) décalées de 180° l'une par rapport à l'autre.

Des engrenages externes (210,220) sont supportés de manière rotative respectivement par les deux zones excentriques (211, 212) via des roulements (15) montés autour des deux zones excentriques (211, 212), permettant une rotation relative de l'arbre d'entrée (100) et des engrenages externes (210, 220).

L'homme du métier connaît le fonctionnement d'un réducteur trochoïdal, qui ne sera pas décrit en détail dans le présent brevet, hormis en ce qui concerne les caractéristiques innovantes, portant sur la structure du boîtier assurant à la fois des fonctions d'habillage du mécanisme et de fourniture des zones d'entraînement intérieures des engrenages externes (210, 220).

Il y a trois étages mobiles :
- l'arbre d'entrée (100) avec les deux excentriques (211, 212),
- les engrenages externes (210, 220) présentant des alvéoles (230) de section supérieure à la section de tiges perpendiculaires (240) traversant ces alvéoles (230),
- l'arbre de sortie (9).

Les deux excentriques (211, 212) tournent à la même vitesse que le rotor et entraînent les deux engrenages externes (210, 220).

Les engrenages externes (210, 220) présentent des dentures extérieures roulant sur les surfaces intérieures correspondantes du boîtier (1) au niveau de la seconde section (120).

L'arbre de sortie (9) supporte solidairement des tiges perpendiculaires (240) qui s'introduisent dans les alvéoles (230) correspondant des engrenages externes, permettant ainsi l'entrainement de la couronne mobile (260) du côté opposé à l'arbre de sortie (9). Les tiges perpendiculaires (240) peuvent être équipées de rouleaux qui entraînent l'arbre de sortie (9) (non montré ici). Ceci permet éventuellement de réduire les pertes par friction, le niveau sonore et l'usure.

Les engrenages externes (210, 220) présentent chacun une pluralité de dents externes qui engrènent avec des dents internes prévues sur la périphérie intérieure de la troisième section (120) du boîtier (1).

Le nombre des dents externes sur chacune des roues dentées externes (210, 220) est inférieur à celle de la denture intérieure de la troisième section (120) du boîtier (1). Typiquement une dent de moins est présente sur les engrenages externes (210, 220) relativement à la denture du boitier (1).

La quatrième section (130) est prolongée par un fond transversal présentant une ouverture circulaire (8) pour le passage de l'arbre de sortie (9) et présentant à sa surface intérieure une butée annulaire pour le positionnement de l'arbre de sortie (9). Cette quatrième section (130) assure le positionnement mécanique du roulement de guidage (150) de l'arbre de sortie (9).

Chaque dent externe présente un profil dont la forme peut être soit cycloïdale, soit en développante de cercle suivant les rapports de réduction souhaités.

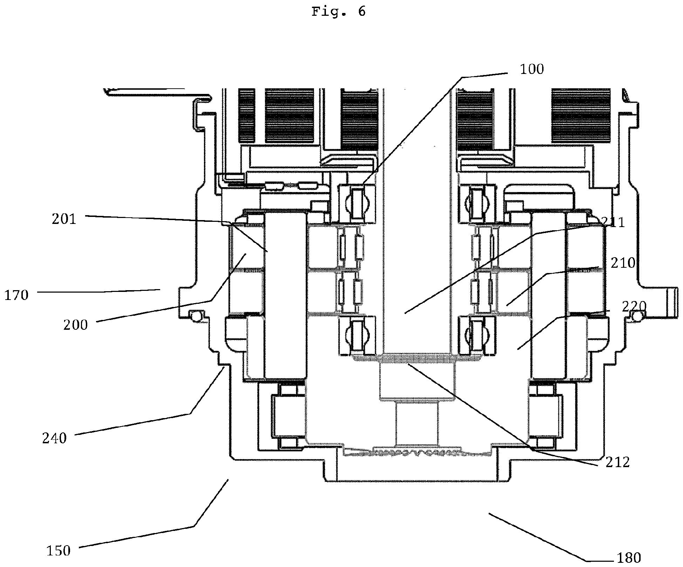

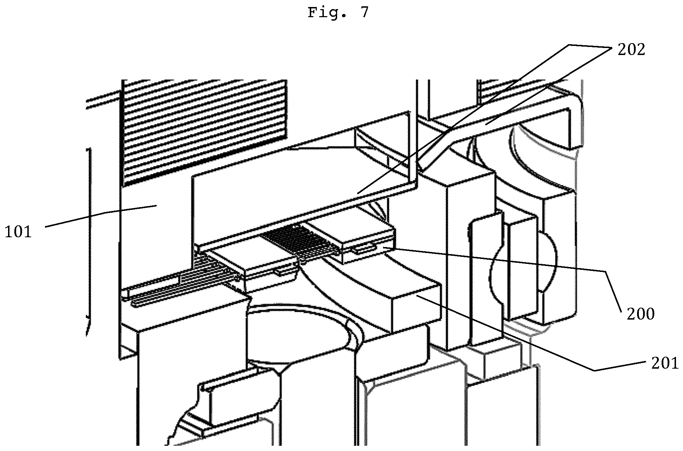

Les figures 6 et 7 décrivent une variante de réalisation comprenant une sonde magnétosensible (200). Ce capteur est constitué par une sonde de Hall placée en face d'une zone aimantée (201).

Deux éléments de blindage (202) sont disposés entre ladite partie statorique et ladite sonde de détection (201) entre le moteur (2) et le roulement de guidage (104) et entre le moteur (2) et la plaque support (111) du roulement.

La construction suivant l'invention permet notamment d'utiliser la couronne mobile (260) comme support de la zone aimantée (201) afin de constituer la partie du capteur de position qui est solidaire de l'arbre de sortie (9). La sonde magnétosensible (200) est reprise sur un circuit imprimé (non montré) solidaire de la partie statorique (101).

La construction suivant l'invention et l'utilisation d'arbres d'entrée et de sortie creux permet notamment de permettre la fixation de l'ensemble motoréducteur au travers dudit ensemble. Par exemple, le vissage de l'organe à piloter est permis en plus ou en remplacement de l'engrènement prévue avec le crabot (10).

## Revendications

1. Motoréducteur constitué par un moteur électrique (2) présentant une partie statorique (101) et une partie rotorique (102) entraînant l'arbre d'entrée (100) d'un réducteur de type trochoïdal comprenant:
• au moins une zone excentrique (211), solidaire de l'arbre d'entrée (100) et entraînant en rotation au moins un engrenage externe (210) denté,
• une pluralité de tiges perpendiculaires (240) audit engrenage externe (210), ladite pluralité étant solidaire avec un arbre de sortie (9) et étant entraînée par des alvéoles (230) traversant ledit engrenage externe (210),
**caractérisé en ce que** ledit réducteur est logé dans un boîtier (1) monolithique rigide, définissant un volume intérieur présentant, de l'arbre d'entrée (100) vers l'arbre de sortie (9), au moins quatre sections de rayons décroissants,
• une première section (105) définissant une zone périphérique de liaison mécanique avec la partie statorique (101) du moteur électrique (2),
• une seconde section (110) assurant le positionnement mécanique du roulement de guidage (104) de l'arbre d'entrée (100) via une plaque support (111) de roulement,
• une troisième section (120) présentant au moins une surface intérieure dentée pour l'engrènement dudit engrenage externe (210),
• une quatrième section (130) assurant le positionnement mécanique du roulement de guidage (150) de l'arbre de sortie (9).

2. Motoréducteur selon la revendication 1 **caractérisé en ce que** ledit arbre d'entrée est solidaire d'une première zone excentrique (211) entraînant un premier engrenage externe (210) et d'une deuxième zone excentrique (212) entraînant un deuxième engrenage externe (220).

3. Motoréducteur selon la revendication 2 **caractérisé en ce que** ladite troisième section présente
• une première surface intérieure dentée pour l'engrènement d'un premier engrenage externe (210) dudit réducteur trochoïdal,
• une seconde surface intérieure dentée pour l'engrènement d'un deuxième engrenage externe (220) dudit réducteur trochoïdal.

4. Motoréducteur selon la revendication 3 **caractérisé en ce que** lesdites première et seconde surfaces dentées forment une zone tubulaire dentée continue.

5. Motoréducteur selon la revendication 1 ou 2 **caractérisé en ce que** ledit arbre de sortie est creux.

6. Motoréducteur selon la revendication 5 **caractérisé en ce que** ledit arbre d'entrée est creux.

7. Motoréducteur selon l'une au moins des revendications précédentes **caractérisé en ce qu'**il comporte une plaque support (111) venant se positionner contre un épaulement (170) défini au fond de ladite première section, et assurant le positionnement du roulement de guidage (104) de l'arbre d'entrée.

8. Motoréducteur selon l'une au moins des revendications précédentes **caractérisé en ce que** lesdites tiges sont reliées par une couronne mobile (260) sans interaction d'engrenage avec le boîtier (1).

9. Motoréducteur selon la revendication précédente **caractérisé en ce que** ladite couronne mobile (260) reliant lesdites tiges supporte une zone aimantée annulaire (201) interagissant magnétiquement avec une sonde magnétosensible (200) solidaire de la partie statorique (101).

10. Motoréducteur selon la revendication précédente **caractérisé en ce qu'**il comporte des éléments de blindage (202) disposés entre ladite partie statorique (101) et ladite sonde magnétosensible (200).

11. Motoréducteur selon l'une au moins des revendications précédentes **caractérisé en ce que** ladite partie statorique (101) est surmoulée.

12. Motoréducteur selon l'une au moins des revendications précédentes **caractérisé en ce que** ladite partie statorique comprend une sonde magnétosensible (200) positionnée en regard d'une piste magnétique annulaire (201) solidaire de la partie rotorique (102) du moteur.

13. Motoréducteur selon l'une au moins des revendications précédentes **caractérisé en ce que** ladite quatrième section est prolongée par un fond transversal présentant une ouverture circulaire (8) pour le passage de l'arbre de sortie (9) et présentant à sa surface intérieure une butée annulaire (180) pour le positionnement de l'arbre de sortie.

14. Motoréducteur selon l'une au moins des revendications précédentes **caractérisé en ce qu'**il comporte un joint d'étanchéité (107) logé entre le boîtier (1) et ladite partie statorique (101).

## Patentansprüche

1. Getriebemotor bestehend aus einem Elektromotor (2) mit einem Statorteil (101) und einem die Antriebswelle (100) eines Zykloidgetriebes antreibenden Rotorteils (102), welcher folgendes umfasst:
- zumindest einen außermittigen Bereich (211), der fest mit der Antriebswelle (100) verbunden ist und zumindest ein Außenzahnrad (210) in Drehung versetzt,
- eine Vielzahl von Stangen senkrecht (240) zum Außenzahnrad (210), wobei die Vielzahl von Stangen fest mit einer Abtriebswelle (9) verbunden ist und durch eine durch das Außenzahnrad (210) führende Lochung (230) angetrieben wird,
**dadurch gekennzeichnet, dass** das Getriebe in einem starren monolithischen Gehäuse (1) sitzt, das ein Innenvolumen abgrenzt, welches von der Antriebswelle (100) bis zur Abtriebswelle (9) zumindest vier Abschnitte mit immer kleiner werdenden Radien aufweist,
• einen ersten Abschnitt (105), der einen Randbereich für die mechanische Verbindung mit dem Statorteil (101) des Elektromotors (2) abgrenzt,
• einen zweiten Abschnitt (110), der die mechanische Positionierung des Führungslagers (104) der Antriebswelle (100) über eine Trägerplatte (111) des Lagers gewährleistet,
• einen dritten Abschnitt (120), der zumindest eine gezahnte Innenfläche zum Eingreifen der Außenverzahnung (210) aufweist,
• einen vierten Abschnitt (130), der die mechanische Positionierung des Führungslagers (150) der Abtriebswelle (9) gewährleistet.

2. Getriebemotor nach Anspruch 1, **dadurch gekennzeichnet, dass** die Antriebswelle fest mit einem ersten außermittigen Bereich (211) verbunden ist, der eine erste Außenverzahnung (210) antreibt und mit einem zweiten außermittigen Bereich (212), der eine zweite Außenverzahnung (220) antreibt.

3. Getriebemotor nach Anspruch 2, **dadurch gekennzeichnet, dass** der dritte Abschnitt folgendes aufweist:
• eine erste gezahnte Innenfläche zum Eingreifen eines ersten Außenzahnrads (210) des Zykloidgetriebes,
• eine zweite gezahnte Innenfläche zum Eingreifen eines zweiten Außenzahnrads (220) des Zykloidgetriebes.

4. Getriebemotor nach Anspruch 3, **dadurch gekennzeichnet, dass** die erste und die zweite gezahnte Fläche einen durchgängigen gezahnten röhrenförmigen Bereich bilden.

5. Getriebemotor nach Anspruch 1 oder 2, **dadurch gekennzeichnet, dass** die Abtriebswelle hohl ist.

6. Getriebemotor nach Anspruch 5, **dadurch gekennzeichnet, dass** die Antriebswelle hohl ist.

7. Getriebemotor nach zumindest einem der vorhergehenden Ansprüche, **dadurch gekennzeichnet, dass** er eine Trägerplatte (11) umfasst, die sich an eine, am Boden des ersten Abschnitts abgegrenzte Schulter (170) anlegt und die Positionierung des Führungslagers (104) der Antriebswelle gewährleistet.

8. Getriebemotor nach zumindest einem der vorhergehenden Ansprüche, **dadurch gekennzeichnet, dass** die Stangen über einen Laufkranz (260) ohne Wechselwirkung durch Verzahnung mit dem Gehäuse (1) verbunden sind.

9. Getriebemotor nach dem vorhergehenden Anspruch, **dadurch gekennzeichnet, dass** der Laufkranz (260), der die Stangen miteinander verbindet, einen ringförmigen magnetisierten Bereich (201) stützt, der mit einem, fest mit dem Statorteil (101) verbundenen magnetempfindlichen Sensor (200) magnetisch in Wechselwirkung steht.

10. Getriebemotor nach dem vorhergehenden Anspruch, **dadurch gekennzeichnet, dass** er Abschirmungselemente (202) aufweist, die zwischen dem Statorteil (101) und dem magnetempfindlichen Sensor (200) angeordnet sind.

11. Getriebemotor nach dem vorhergehenden Anspruch, **dadurch gekennzeichnet, dass** der Statorteil (101) aufgeformt ist.

12. Getriebemotor nach zumindest einem der vorhergehenden Ansprüche, **dadurch gekennzeichnet, dass** der Statorteil eine magnetempfindliche Sonde (200) umfasst, die gegenüber einer ringförmigen Magnetspur (201) angeordnet ist, welche fest mit dem Rotorteil (102) des Motors verbunden ist.

13. Getriebemotor nach zumindest einem der vorhergehenden Ansprüche, **dadurch gekennzeichnet, dass** der vierte Abschnitt durch einen Querboden verlängert wird, der eine ringförmige Öffnung (8) zum Durchführen der Abtriebswelle (9) aufweist und an seiner Innenfläche einen ringförmigen Anschlag (180) zur Positionierung der Abtriebswelle aufweist.

14. Getriebemotor nach zumindest einem der vorhergehenden Ansprüche, **dadurch gekennzeichnet, dass** er eine Dichtung (107) umfasst, die zwischen dem Gehäuse (1) und dem Statorteil (101) angeordnet ist.

## Claims

1. A gear motor consisting of an electric motor (2) having a stator part (101) and a rotor part (102) driving the input shaft of a trochoidal reduction gear comprising :
- at least one eccentric area (211), rigidly connected to the input shaft (100) and rotating at least one toothed outer gear (210),
- a plurality of rods (240) perpendicular to said outer gear (210), said plurality being rigidly connected to an output shaft (9) and being driven by cavities (230) passing through said outer gear (210),
**characterized in that** said reduction gear is housed in a rigid monolithic housing (1) defining an inner volume having, from the input shaft (100) to the output shaft (9), at least four sections with decreasing radii,
• a first section (105) defining a peripheral area of mechanical connection with the stator part (101) of the electric motor (2),
• a second section (110) ensuring the mechanical positioning of the guide bearing (104) of the input shaft (100) via a bearing support plate (111),
• a third section (120) having at least one toothed inner surface for meshing said outer gear (210),
• a fourth section (130) ensuring the mechanical positioning of the guide bearing (150) of the output shaft (9).

2. A gear motor according to claim 1, **characterized in that** said input shaft is rigidly connected to a first eccentric area (211) driving a first outer gear (210) and a second eccentric area (212) driving a second outer gear (220).

3. A gear motor according to claim 2, **characterized in that** said third section has
• a first toothed inner surface for a first outer gear (210) to mesh with said trochoidal reduction gear,
• a second toothed inner surface for a second outer gear (220) to mesh with said trochoidal reduction gear.

4. A gear motor according to claim 3, **characterized in that** said first and second toothed surfaces form a continuous tubular toothed area.

5. A gear motor according to claim 1 or 2, **characterized in that** said output shaft is hollow.

6. A gear motor according to claim 5, **characterized in that** said input shaft is hollow.

7. A gear motor according to at least one of the preceding claims, **characterized in that** it comprises a support plate (111) being positioned against a shoulder (170) defined at the bottom of said first section, and ensuring the positioning of the guide bearing (104) of the input shaft.

8. A gear motor according to at least one of the preceding claims, **characterized in that** said rods are connected by a first stage sun gear (260) without gearing interaction with the housing (1).

9. A gear motor according to the preceding claim, **characterized in that** said first stage sun gear (260) connecting said rods supports an annular magnetised area (201) magnetically interacting with a magneto-sensitive probe (200) rigidly connected to the stator part (101).

10. A gear motor according to the preceding claim, **characterized in that** it comprises shielding elements (202) placed between said stator part (101) and said magneto-sensitive probe (200).

11. A gear motor according to at least one of the preceding claims, **characterized in that** said stator part (101) is overmolded.

12. A gear motor according to at least one of the preceding claims, **characterized in that** said stator part comprises a magneto-sensitive probe (200) positioned opposite an annular magnetic track (201) rigidly connected to the rotor part (102) of the engine.

13. A gear motor according to at least one of the preceding claims, **characterized in that** said fourth section is extended by a transverse bottom having a circular opening (8) for the passage of the output shaft (9) and having, on its inner surface, an annular stop (180) for positioning the output shaft.

14. A gear motor according to at least one of the preceding claims, **characterized in that** it comprises a gasket (107) accommodated between the housing (1) and said stator part (101).
